# FASCICULE DE BREVET EUROPEEN

(11) **EP 3 679 358 B1**
(45) Date de publication et mention de la délivrance du brevet: **18.06.2025**
(21) Numéro de dépôt: 18768846.0
(22) Date de dépôt: 07.09.2018
(51) Int. Cl.: G01N 21/90, B65G 47/52, B65G 47/86

(54) **SYSTÈME DE TRANSPORT D'ARTICLES, ÉQUIPÉ D'UN DISPOSITIF INTÉGRÉ D'INSPECTION À LA VOLÉE**
SYSTEM ZUM TRANSPORTIEREN VON GEGENSTÄNDEN MIT EINER INTEGRALEN VORRICHTUNG FÜR ZEITGLEICHE KONTROLLE
SYSTEM FOR TRANSPORTING ARTICLES, EQUIPPED WITH AN INTEGRAL DEVICE FOR INSPECTION ON THE FLY

(30) Priorité: 08.09.2017 FR 1758321
(43) Date de publication de la demande: 15.07.2020
(73) Titulaire: Sidel Participations, 76930 Octeville-sur-Mer (FR)
(72) Inventeur: MOULIN, Sébastien, 76930 Octeville-sur-Mer (FR)
(74) Mandataire: Sidel Group
(86) Numéro de dépôt international: PCT/EP2018/074165
(87) Numéro de publication internationale: WO 2019/048622

(56) Documents cités:
- WO-A1-96/15896
- DE-C1- 19 914 028
- FR-A1- 2 919 595
- JP-A- 2010 249 541
- US-A- 4 915 237

## Description

L'invention a trait au domaine de la manutention des articles, par ex. des récipients (notamment en matière plastique tel que PET).

De nombreux articles manufacturés sont soumis à des exigences de conformité à un modèle prédéterminé. Entre autres, les récipients présentent une forme qui doit corresponde autant que possible à celle d'un récipient modèle, à défaut de quoi le récipient risque de poser problème lors de certaines opérations (par ex. lors du remplissage ou de l'étiquetage). Ainsi, certains récipients mal formés peuvent provoquer la casse de composants mécaniques des machines au sein desquels ils évoluent.

Dans une installation classique de fabrication de récipients, des préformes initialement stockées en vrac dans un conteneur sont prélevées dans celui-ci, orientées et mises au pas, introduites à cadence déterminée dans une unité de conditionnement thermique (ou four) pour y être chauffées à une température supérieure à la température de transition vitreuse de la matière (laquelle est de 80°C dans le cas du PET). Les préformes ainsi chauffées sont ensuite transférées vers une unité de formage où elles sont introduites, chacune, dans un moule à l'empreinte du modèle de récipient à former.

Chaque récipient est ensuite évacué du moule pour être transporté vers d'autres unités de traitement : rinçage, remplissage, bouchage, étiquetage. Certaines de ces unités de traitement nécessitent que le récipient soit conforme au modèle, ou à tout le moins exempt de défaut majeur.

A titre d'exemple, dans une unité de traitement par plasma, ayant pour fonction de déposer sur la paroi interne d'un récipient une couche barrière (voir par ex. la demande de brevet européen EP 2 077 919 - Sidel Participations), un injecteur sous forme d'une tige creuse est inséré dans le récipient pour y introduire un gaz précurseur nécessaire à l'établissement du plasma. Cet injecteur est à la fois précieux et fragile, la moindre casse nécessitant une interruption de la production et un remplacement coûteux.

Un injecteur peut se tordre, voir casser, lorsque le récipient présente par ex. une hauteur inférieure à la hauteur du récipient modèle : dans ce cas en effet, l'injecteur vient buter inopinément contre le fond du récipient non conforme. Il existe d'autres cas similaires de déformation ou de casse, par ex. au niveau d'une buse de projection dans une unité de rinçage des récipients.

Il apparaît nécessaire, par conséquent, d'éjecter les récipients non conformes avant leur introduction dans l'unité de traitement que l'on souhaite préserver de tout endommagement dû aux défauts de forme. A cet effet, il convient de procéder à une inspection des récipients.

Une inspection mécanique (par métrologie de contact ou palpation) n'est pas réaliste : les cadences de production des installations de fabrication des récipients sont trop élevées (elles atteignent 40 000 articles par heure). L'inspection optique s'impose donc.

On connaît notamment du brevet européen EP 1 477 794 (Krones) un dispositif d'inspection optique d'un récipient, qui comprend une enceinte dans laquelle un récipient à contrôler est placé et éclairé, et un dispositif de prise de vues pour reproduire la surface d'enveloppe du récipient ainsi éclairé, de sorte à en établir le contour.

On connaît également des brevets DE19914028 (Krones) et WO9615896 (INTELLIGENT INSPECTION SYSTEMS) décrivant un dispositif d'inspection optique d'un récipient qui comprend un dispositif de prise de vues et une source lumineuse ou un écran placé dans l'axe de révolution du récipient à contrôler. Dans ce type de dispositif, la prise de vue est réalisée sur le trajet de déplacement du récipient en un point. Toutefois, l'augmentation des cadences des installations de soufflage rend compliquer la prise de vue en un point à cause de la stabilité du récipient lors de son convoyage.

Ce dispositif est cependant conçu pour effectuer un contrôle statistique, c'est-à-dire un contrôle ponctuel sur un récipient prélevé au hasard sur une ligne de production ; ce dispositif est inadapté à un contrôle systématique que l'on souhaiterait effectuer sur *chaque* récipient pendant un intervalle de temps réduit à une fraction de seconde.

Le besoin persiste donc d'une solution permettant d'effectuer une inspection systématique, à la volée, des articles (tels que des récipients) circulant dans un système de transport intégré par ex. au sein d'une installation de manutention des articles.

A cet effet, il est proposé, en premier lieu, un système de transport d'articles selon la revendication 1. Ledit système comprend un bâti et :
- Au moins une première roue tournant par rapport au bâti autour d'un premier axe de rotation et portant sur sa périphérie une série d'organes de préhension des articles qui définissent pour les articles un trajet de déplacement en arc de cercle ;
- Un dispositif d'inspection optique des articles qui inclut, de part et d'autre d'un point de transit situé sur le trajet :
   ∘ Un appareil de prise de vues comprenant un objectif orienté selon un axe optique situé sensiblement dans un plan de tangence au trajet contenant le point de transit ;
   ∘ Un écran placé en regard de l'objectif, perpendiculairement à l'axe optique.

Ainsi disposé, ce dispositif d'inspection optique permet de réaliser une inspection systématique de tous les récipients à l'instant où ils passent par le point de transit. Cela permet de détecter tout récipient affecté d'un défaut de forme et, lorsque nécessaire, de l'éjecter avant qu'il ne parvienne dans une zone où il risquerait d'endommager des composants mécaniques fragiles de l'installation.

On entend par axe optique situé sensiblement dans un plan de tangence à un trajet circulaire autour du premier axe de rotation, le fait d'être tangent à la périphérie de la roue, en particulier au point de transit. De manière avantageuse mais non obligatoire, le plan de tangence peut être perpendiculaire au rayon de la roue passant par le point de transit.

Selon l'invention le système comprend au moins une deuxième roue tournant par rapport au bâti autour d'un deuxième axe de rotation et portant sur sa périphérie une série d'organes de préhension des articles, et dans lequel l'appareil et l'écran sont disposés de part et d'autre d'un point de transit commun à la première roue et à la deuxième roue et correspondant à un point de transfert des récipients de l'une à l'autre.

Cela présente l'avantage que la prise de vue soit réalisée au point **T** de transit. Cela permet que les organes de préhension des première et deuxième roues contribuent simultanément à tenir l'article. On obtient ainsi une meilleure stabilité du récipient lors de la prise de vue. Cette grande stabilité du récipient lors de la prise de vue permet d'éviter les prises de vue floues.

Avantageusement, le récipient peut être saisi au-dessus et en dessous de la collerette de l'article par les organes de préhension de la première roue et de la deuxième roue.

Il est proposé, en deuxième lieu, une installation de manutention d'articles selon la revendication 12, qui comprend un tel système de transport.

Diverses caractéristiques supplémentaires peuvent être prévues, seules ou combinées. Ainsi, par ex. :
- Le dispositif d'inspection comprend un portique sur lequel sont conjointement montés l'appareil de prise de vues et l'écran ;
- Le portique est fixé sur le bâti ;
- L'appareil de prise de vues comprend deux objectifs superposés, dont les axes optiques sont parallèles ;
- L'écran comprend un panneau diffuseur rétroéclairé ;
- Il comprend en outre un dispositif d'éjection des articles non conformes, monté sous une roue ;
- chaque organe de préhension se présente sous forme d'une pince ayant deux mors articulés entre une position de préhension dans laquelle les mors sont rapprochés, et une position de libération dans laquelle les mors sont écarté, l'un des mors étant solidaire d'un levier portant un galet, et le dispositif d'éjection comprend un actionneur mobile entre une position rétractée dans laquelle il est écarté du chemin parcouru par le galet, et une position déployée dans laquelle il se trouve sur le chemin parcouru par le galet pour le placer en position de libération ;
- L'actionneur est porté par une tige de vérin monté en translation dans un corps de vérin solidaire du bâti ;
- Le corps de vérin est solidaire d'un porte-fusée solidaire du bâti et dans lequel est monté un arbre formant l'axe de rotation de la roue ;
- Le dispositif d'éjection comprend une soufflette raccordée à une source d'air sous pression ;
- La soufflette débouche à l'aplomb de l'actionneur.

Il est aussi proposé, selon la revendication 13, un procédé d'inspection d'articles sur un système de transport tel que présenté ci-dessus, qui comprend les opérations suivantes :
- Prendre en compte une prise de vue de l'article lors de son passage par le point de transit ;
- Comparer dans une image résultant de cette prise de vue au moins une zone d'intérêt de l'article avec une zone correspondante d'un article modèle.

Si l'article est décrété non conforme au modèle, il est avantageusement prévu une opération d'éjection de l'article lors de son passage au droit du dispositif d'éjection.

D'autres objets et avantages de l'invention apparaîtront à la lumière de la description d'un mode de réalisation, faite ci-après en référence aux dessins annexés dans lesquels :
- La **FIG.1** est une vue schématique, de dessus, d'une installation de production de récipient, qui comprend un système de transport des récipients équipé d'un dispositif intégré d'inspection des récipients ;
- La **FIG.2** est une vue en perspective réaliste, à plus grande échelle, du système de transport ;
- La **FIG.3** est une vue partielle en perspective du dispositif d'inspection ;
- La **FIG.4** est une vue partielle en perspective du dispositif d'inspection de la **FIG.3****,** suivant une autre orientation dans l'espace ;
- La **FIG.5** est une vue partielle de côté du dispositif d'inspection des **FIG.3 et FIG.4** ;
- La **FIG.6** est une vue partielle de dessus du dispositif d'inspection des **FIG.3, FIG.4** **et** **FIG.5** ;
- La **FIG.7** est une vue en coupe selon le plan VII-VII de la **FIG.5** illustrant l'acquisition optique du contour d'un récipient par le dispositif d'inspection ;
- La **FIG.8** est une vue en perspective montrant une roue de transfert du système de transport équipée d'un dispositif d'éjection d'un récipient non conforme avec, en médaillon, un détail à plus grande échelle centré sur le dispositif d'éjection, lequel est représenté dans une position rétractée ;
- La **FIG.9** est une vue de similaire à la **FIG.8****,** montrant le dispositif d'éjection en position déployée pour l'éjection d'un récipient décrété non conforme à l'issue de son inspection.

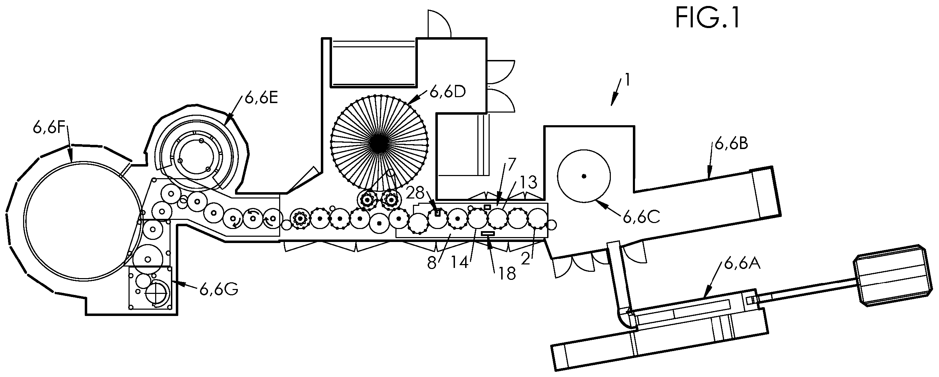

Sur la **FIG.1** est représentée une installation **1** de manutention d'articles dont on souhaite inspecter le contour pour en vérifier la conformité à un modèle prédéterminé.

Dans l'exemple illustré, l'installation **1** est une ligne de production de récipients **2** à partir de préformes en matière plastique, typiquement en polytéréphtalate d'éthylène (PET). Cette application n'est toutefois pas limitative, l'important étant lors que les articles soient manufacturés et présentent une forme particulière supposée correspondre à celle du modèle.

Quoiqu'il en soit, dans l'exemple illustré, les articles à inspecter sont les récipients **2.** Chaque récipient **2** comprend un corps **3,** un col **4** qui s'ouvre à une extrémité supérieure du corps **3,** et un fond **5** qui ferme le corps **3** à une extrémité inférieure de celui-ci. Dans le présent exemple, c'est le corps **3** (et en particulier son contour) dont on souhaite vérifier la conformité au modèle. De plus, le corps et le col du récipient sont séparés par une collerette (non représentée sur les figures) servant à son transport dans la ligne de production.

L'installation **1** comprend, en premier lieu, une pluralité d'unités **6** de traitement des récipients **2,** prévues chacune pour réaliser sur les récipients **2** (ou les préformes à partir desquels les récipients **2** sont formés) une fonction particulière, à savoir, en l'espèce :
- Une unité **6A** d'alimentation en préformes, qui assure le prélèvement des préformes dans un bac de vrac, puis leur orientation (col en haut ou col en bas) et leur mise en rang ;
- Une unité **6B** de conditionnement thermique des préformes (également appelée four), configurée pour porter les préformes issues de l'unité **6A** d'alimentation à une température supérieure à la température de transition vitreuse de la matière (dans le cas du PET, dont la température de transition vitreuse est de 80°C environ, la température de chauffe des préformes est ordinairement de 120°C environ) ; cette unité **6B** de conditionnement thermique comprend ordinairement une série de sources de rayonnement infrarouge (typiquement des lampes halogène) devant lesquelles les préformes sont transportées au défilé, mais on peut imaginer des postes individuels de chauffe montés sur une roue ;
- Une unité **6C** de formage des récipients **2** par soufflage ou étirage soufflage (également appelée souffleuse) des préformes ainsi conditionnées thermiquement, qui comprend typiquement un carrousel et, montés sur celui-ci, des moules à l'empreinte du modèle de récipient ;
- Le cas échéant, une unité **6D** de traitement des récipients **2** par plasma pour déposer sur leur paroi interne une mince couche d'espèces carbonées formant une couche barrière interne à l'air ; cette unité **6D** de traitement par plasma comprend typiquement un carrousel et une pluralité de postes de traitement des récipients **2** montés sur celui-ci ;
- Une unité **6E** de rinçage (également appelée rinceuse), qui comprend typiquement un carrousel et, montées sur celui-ci, une pluralité de buses pulvérisant dans chaque récipient un fluide (par ex. de l'air ou de l'eau) permettant d'en évacuer les éventuelles impuretés ;
- Une unité **6F** de remplissage (également appelée remplisseuse) qui comprend typiquement un carrousel et, montées sur celui-ci, une pluralité de vannes de distribution d'un produit (notamment alimentaire, typiquement une boisson) dans les récipients **2** ;
- Une unité **6G** de bouchage (également appelée boucheuse), qui comprend un carrousel et, montés sur celui-ci, des applicateurs de bouchons pour fermer de manière étanche les récipients **2** préalablement remplis ;
- Le cas échéant, une unité d'étiquetage (également appelée étiqueteuse, non représentée ici) configurée pour appliquer sur chaque récipient **2** rempli et bouché une étiquette à valeur informative.

Ces unités **6** de traitement sont évoquées à titre illustratif et non limitatif. D'autres unités de traitement pourraient être prévues, comme une unité de séchage, interposée entre l'unité **6E** de rinçage et l'unité **6F** de remplissage.

L'installation **1** comprend, en deuxième lieu, un système **7** de transport des récipients **2** entre certaines des unités **6** de traitement.

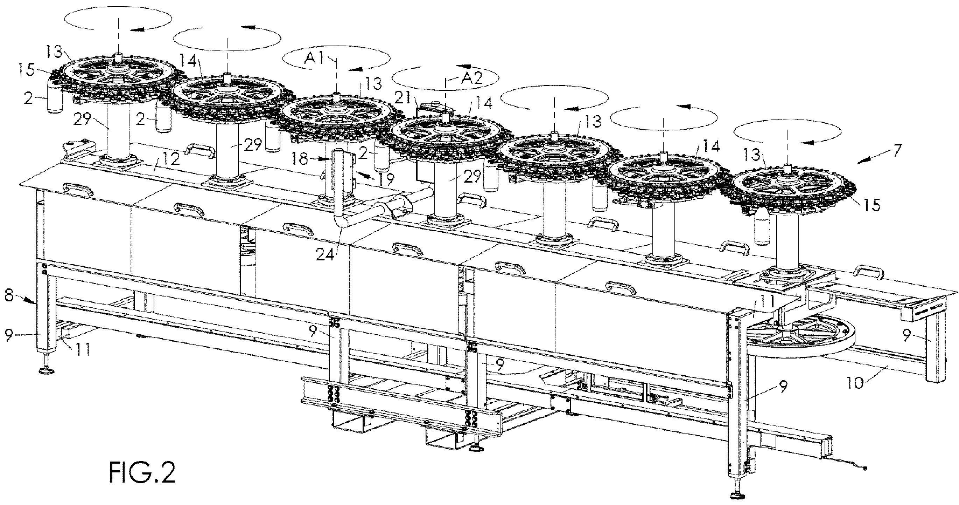

Ce système **7** de transport comprend un bâti **8** fixe, formé typiquement d'un assemblage de pieds **9,** de longerons **10** et de traverses **11.** Dans l'exemple illustré sur la **FIG.2****,** le bâti **8** comprend notamment une poutre **12** maîtresse.

Le système **7** de transport comprend en outre au moins une première roue **13** tournant par rapport au bâti **8** autour d'un premier axe **A1** de rotation (qui, en fonctionnement de l'installation **1,** s'étend verticalement).

En pratique, le système **7** de transport comprend au moins deux (et potentiellement, comme illustré, plus de deux) roues **13, 14,** à savoir :
- Au moins une première roue **13** tournant par rapport au bâti **8** autour d'un premier axe **A1** de rotation ;
- Au moins une deuxième roue **14** tournant par rapport au bâti autour d'un deuxième axe **A2** de rotation parallèle au premier axe **A1.**

En fonctionnement de l'installation **1,** les axes **A1, A2** de rotation sont verticaux ; la deuxième roue **14** est située en aval de la première roue **13,** dans le sens de parcours des récipients **2.**

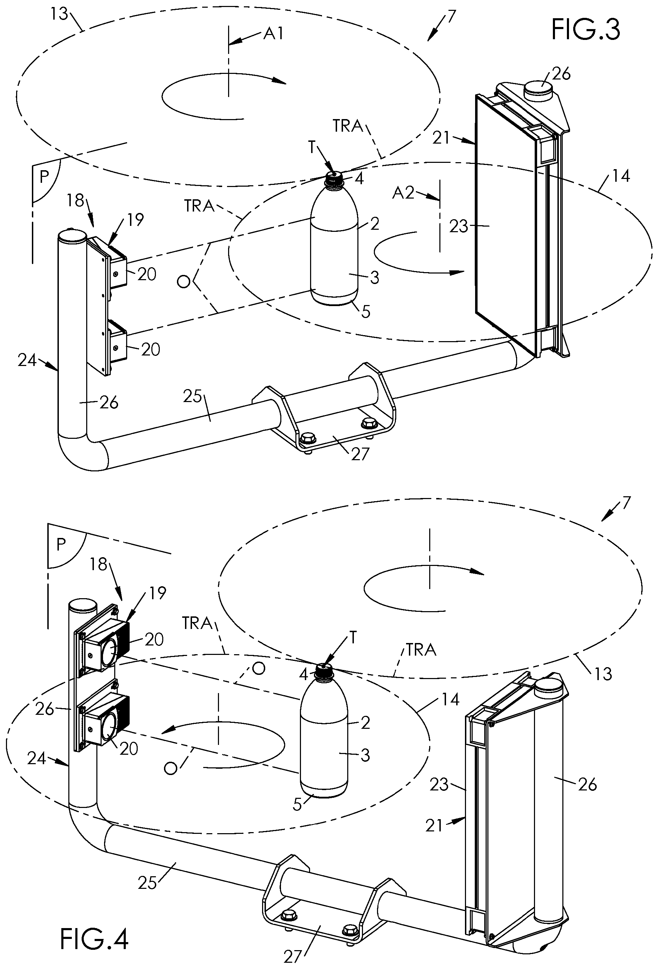

La première roue **13** et la deuxième roue **14** sont adjacentes ; elles sont agencées de manière que les récipients **2** soient transférés de la première roue **13** à la deuxième roue **14.** Les roues **13, 14** tournent par conséquent en sens inverse. Dans l'exemple illustré sur les **FIG.3 et FIG.4****,** lorsque vues de dessus, la première roue **13** et la deuxième roue **14** tournent respectivement dans le sens horaire et dans le sens antihoraire.

Dans l'exemple illustré sur la **FIG.2****,** où le système **7** de transport comprend des roues **13, 14** montées en série en nombre supérieur à deux (en l'espèce au nombre de sept), une roue sur deux est similaire à la première roue **13** et tournant dans le même sens qu'elle (ici horaire), les autres roues étant similaires à la deuxième roue **14** et tournant dans le même sens qu'elle (ici antihoraire).

La (ou chaque) roue **13, 14** de transfert porte, sur sa périphérie, une série d'organes **15** de préhension des récipient **2** qui définissent pour ceux-ci un trajet **TRA** de déplacement en arc de cercle (sur les **FIG.3 et FIG.4****,** les trajets **TRA** apparaissent confondus avec les roues **13, 14** en raison de la schématisation de celles-ci).

Dans l'exemple illustré, où le système **7** de transport comprend au moins deux roues **13, 14,** le trajet **TRA** s'étend depuis une autre roue **14** (respectivement **13**) ou une unité **6** de traitement située en amont, jusqu'à encore une autre roue **14** (respectivement **13**) ou une autre unité **6** de traitement située en aval. Les flèches tracées sur la **FIG.2** illustrent le sens de rotation des roues **13, 14.**

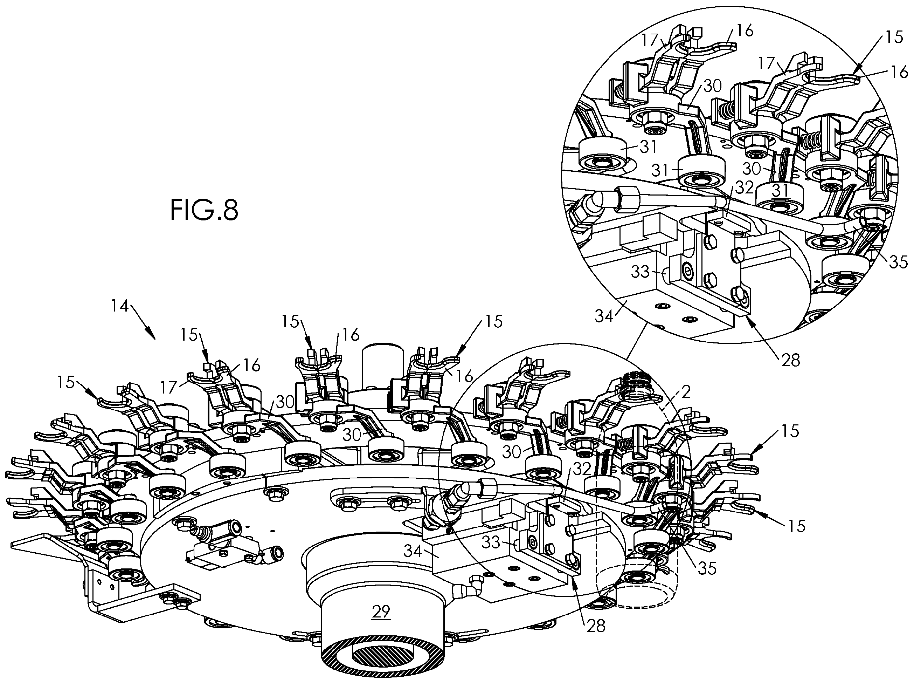

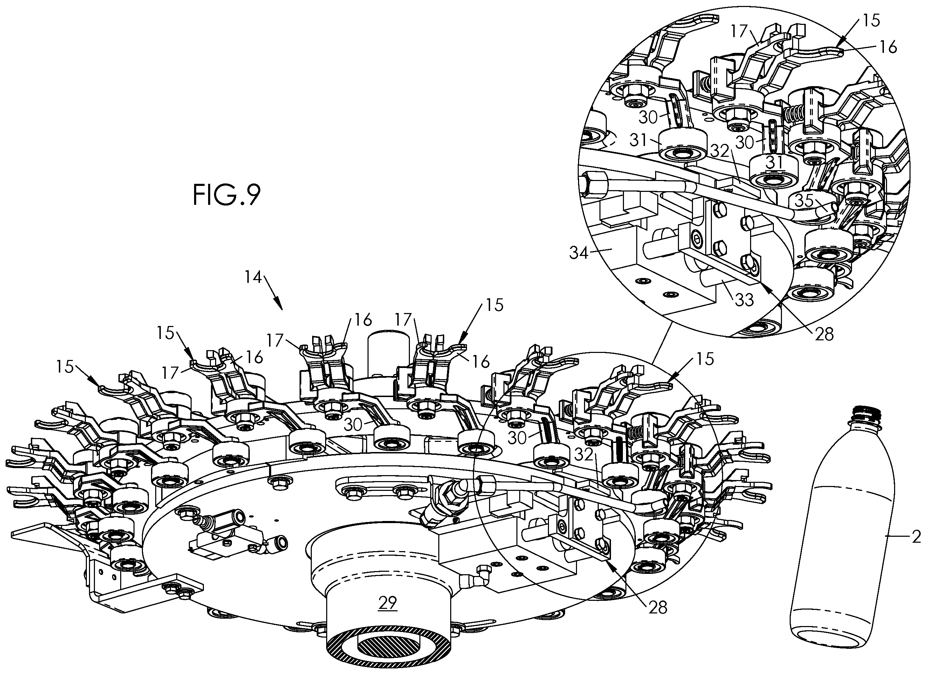

Selon un mode de réalisation illustré sur les **FIG.8** et **FIG.9****,** chaque organe **15** de préhension se présente sous forme d'une pince ayant deux mors **16, 17** articulés entre une position de préhension (**FIG.8**) dans laquelle les mors **16, 17** sont rapprochés pour saisir un récipient **2,** et une position de libération dans laquelle les mors **16, 17** sont écartés pour libérer un récipient **2** et permettre sa saisie par une pince **15** d'une autre roue **13** (ou **14**) ou son transfert vers une unité **6** de traitement.

On note **T** un point de transit, situé sur le trajet **TRA** et par lequel chaque récipient passe à un instant donné sur une roue **13** donnée. On note par ailleurs **P** un plan de tangence au trajet **TRA** au point **T** de transit. Ce plan **P** s'étend verticalement, parallèlement à l'axe **A1** de rotation.

Dans un exemple particulier, illustré sur les dessins, le point **T** de transit peut être commun à un première roue **13** et à une deuxième roue **14,** c'est-à-dire que le point **T** de transit est en fait un point de transfert où les pinces **15** respectives de la première roue **13** et de la deuxième roue **14** se chevauchent pour permettre le transfert des récipients **2** de la première roue **13** à la deuxième roue **14,** le récipient **2** étant libéré d'une pince **15** de la première roue **13** pour être simultanément saisi par une pince **15** de la deuxième roue **14.**

Dans ce cas, le point **T** de tangence (ou de transfert) correspond, sur la trajectoire de chaque récipient **2** (qui comprend les trajets **TRA** suivis successivement par le récipient **2** sur l'ensemble des roues **13, 14**), à un point d'inflexion, où la trajectoire du récipient **2** s'infléchit

Dans ce cas également, le plan **P** de tangence au point **T** de transit (c'est-à-dire au point de transfert entre les roues **13, 14**) s'étend parallèlement aux axes **A1, A2** de rotation respectifs des roues **13, 14** et perpendiculairement au plan contenant les axes **A1, A2.**

Pour vérifier la conformité des récipients **2** (et plus précisément du corps **3** des récipients **2**), le système **7** de transport comprend un dispositif **18** d'inspection optique des récipients **2.**

Ce dispositif **18** est configuré pour réaliser au moins une prise de vue de chaque récipient **2.**

A cet effet, le dispositif **18** d'inspection comprend, de part et d'autre du point **T** de transit (qui peut, comme dans l'exemple illustré, se confondre avec le point de transfert des récipients **2** d'une première roue **13** à une deuxième roue **14**) :
- D'une part, un appareil **19** de prise de vues comprenant un objectif **20** orienté selon un axe **O** optique situé sensiblement dans le plan **P** de tangence ;
- D'autre part, un écran **21** placé en regard de l'objectif **20,** perpendiculairement à l'axe **O** optique.

Selon un mode préféré de réalisation illustré sur les dessins, et plus particulièrement sur la **FIG.3, FIG.4** et **FIG.5****,** l'objectif **20** est orienté de manière telle que l'axe optique O est horizontal.

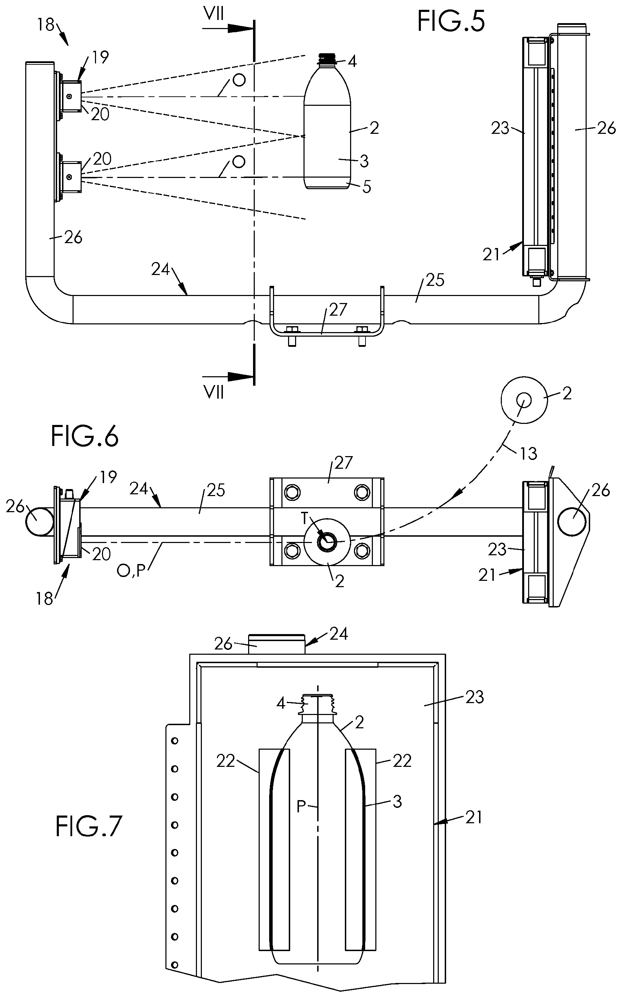

Selon le choix de l'objectif **20,** le champ de vision de l'appareil **19,** schématisé en pointillés sur la **FIG.5****,** n'englobe pas forcément la totalité du corps **3** du récipient **2.** C'est pourquoi, dans ce cas, et comme illustré, l'appareil **19** de prise de vues peut comprendre deux objectifs **20** superposés, dont les axes **O** optiques respectifs sont avantageusement parallèles, et dont les champs de vision englobent des zones adjacentes (ou se chevauchant partiellement) du corps **3** du récipient **2.**

L'appareil **19** est de préférence numérique, c'est-à-dire que ses prises de vues sont mémorisées sous forme de données numériques. Dans ce cas, l'appareil **19** comprend, en association avec l'objectif **20** (ou avec chaque objectif **20**) un capteur optique, typiquement de type matriciel, communément connu sous l'acronyme CCD (charged coupled device).

Comme illustré sur la **FIG.7****,** les données issues des prises de vue apparaissent (éventuellement après un traitement incluant par ex. un filtrage) aboutissent à la reconstitution d'une image bidimensionnelle du récipient **2,** qui peut être comparée localement ou en totalité à une image bidimensionnelle du modèle de récipient, conservée en mémoire.

Selon un mode particulier du récipient, seules des zones **22** d'intérêt localisées de l'image du récipient **2** sont comparées aux zones correspondantes du modèle. Ainsi, dans l'exemple illustré, une analyse de l'image capturée est faite pour isoler, dans deux zones **22** d'intérêt (que l'on a représenté sous forme de fenêtres), des contours du corps **3** dont on peut estimer qu'ils sont seuls pertinents pour apprécier la conformité du récipient **2** au modèle. Ce sont alors ces contours qui sont comparés aux contours correspondants du modèle de récipient, ce qui permet de simplifier (et donc d'accélérer) les calculs.

L'écran **21** a pour fonction première de former dans l'image, autour du récipient, un fond diffus, de couleur sensiblement uniforme, dépourvu d'éléments parasites qui seraient sinon situés à l'arrière-plan du récipient **2.**

L'écran **21** peut être mis à profit pour augmenter le contraste de l'image restituée du récipient **2.** A cet effet, l'écran **21** peut comprendre un panneau **23** diffuseur rétroéclairé. Ce panneau **23** est par ex. fait d'une plaque en verre dépoli ou en plastique superficiellement granuleux (ou translucide dans la masse), derrière laquelle sont disposées des sources lumineuses, par ex. sous forme de diodes électroluminescentes, de préférence de couleur blanche.

D'un point de vue pratique, et selon un mode de réalisation illustré notamment sur les **FIG.3** et **FIG.4****,** le dispositif **18** d'inspection comprend un portique **24** sur lequel sont montés conjointement l'appareil **19** (avec ses deux objectifs **20** dans l'exemple illustré) et l'écran **21.**

Ce portique **24** se présente par ex. sous forme d'un tube métallique plié en U et comprenant une traverse **25** horizontale et, aux extrémités de celle-ci, deux montants **26** verticaux sur l'un desquels est fixé l'appareil **19** tandis que sur l'autre est fixé l'écran **21.**

Ce portique **24** est avantageusement fixé sur le bâti **8.** Dans l'exemple illustré, cette fixation est réalisée au moyen d'une bride **27** boulonnée dans le bâti **8** (et plus précisément dans la poutre **12** maîtresse) et dans laquelle est montée serrée la traverse **25.**

Selon un mode préféré de réalisation, illustré sur les **FIG.8** et **FIG.9****,** le système **7** de transport comprend en outre un dispositif **28** d'éjection des récipients **2** non conformes. Ce dispositif est monté sous une roue **13** (ou **14**), en aval du dispositif **18** d'inspection.

Dans l'exemple illustré, l'axe **A1** (ou **A2**) de rotation de chaque roue **13** (ou **14**) est formé par un arbre monté dans un porte-fusée **29** solidaire du bâti **8** (en étant par ex. fixé, par ex. par soudure, sur la poutre **12** maîtresse).

Par ailleurs, un mors **17** de chaque pince **15** est solidaire d'un levier **30** portant un galet **31.** En fonctionnement normal, lorsqu'une pince **15** parvient au point **T** de transfert, le galet **31** vient coopérer avec une came (non représentée) qui, par son intermédiaire, manœuvre le levier **30** pour placer les mors **16, 17** en position de libération et ainsi ouvrir la pince **15.**

Le levier **30** et le galet **31** sont mis à profit par le dispositif **28** d'éjection pour éjecter, lorsque nécessaire, un récipient **2** dont l'inspection a révélé sa non-conformité au modèle.

A cet effet, le dispositif **28** d'éjection comprend un actionneur **32** mobile entre une position rétractée (**FIG.8**) dans laquelle il est écarté du chemin parcouru par le galet **31,** et une position déployée (**FIG.9**) dans laquelle il se trouve sur le chemin parcouru par le galet **31** (celui de la pince **15** portant le récipient **2** non conforme) pour le placer, à la manière d'une came, en position de libération.

Selon un mode de réalisation illustré sur les **FIG.8** et **FIG.9****,** l'actionneur **32** est porté par une tige **33** de vérin montée en translation dans un corps **34** de vérin solidaire du bâti **8.**

Plus précisément, dans l'exemple illustré, le corps **34** de vérin est solidaire du porte-fusée **29** (par ex. en lui étant vissé) - et par conséquent fixe en rotation par rapport à la roue **13** (ou **14**).

Lorsque l'inspection d'un récipient **2** a révélé sa non-conformité, le dispositif **28** d'éjection est actionné au moment où le récipient **2** parvient au droit de l'actionneur **32,** celui-ci étant déplacé vers sa position déployée pour provoquer l'ouverture de la pince **15** (**FIG.9**).

Le dispositif **28** d'éjection est situé en aval du dispositif **18** d'inspection à une distance prédéterminée de celui-ci (mesurée le long de la trajectoire parcourue par les récipients **2**). Aussi, pour activer le dispositif **28** d'éjection à l'instant approprié, le récipient **2** décrété non conforme est pisté le long de son parcours par mesure (ou calcul) de sa position instantanée, au moins dans la zone située entre le point **T** de transfert où il a été inspecté et le point où il parvient au droit du dispositif **28** d'éjection.

Pour faciliter (et accélérer) l'éjection du récipient **2,** le dispositif **28** d'éjection peut être équipé d'une soufflette **35,** raccordée à une source d'air sous pression (typiquement à un circuit d'air comprimé à 7 bars).

La soufflette **35** débouche à l'aplomb de l'actionneur **32.** Une électrovanne est commandée pour alimenter en air comprimé la soufflette **35** simultanément au déploiement de l'actionneur **32,** de sorte à diriger sur le récipient **2** un jet d'air qui facilite son éjection, comme illustré sur la **FIG.9****.**

Le système **7** de transport qui vient d'être décrit permet de procéder à une inspection systématique de tous les récipients **2** à l'instant où ils transitent par le point **T** de transit (et d'éjecter tout récipient **2** décrété non conforme), au bénéfice de la fiabilité de l'installation **1**, dont le temps d'interruption pour maintenance se trouve ainsi considérablement réduit. Le fait que l'axe **O** optique de l'appareil **19** de prise de vues soit situé dans le plan **P** de tangence :
- Premièrement, évite la superposition de plusieurs récipients **2** dans le champ de vision de l'appareil **19** de prise de vues ;
- Deuxièmement, du point de vue de l'appareil **19,** minimise le risque de flou dans l'image du récipient **2** inspecté, car l'amplitude des mouvements latéraux de celui-ci sont faibles pendant la prise de vues en raison de son passage puisque le trajet **TRA** suivi par le récipient **2** est localement tangent à la direction générale définie par l'axe **O** optique au point **T** de transit où a lieu la prise de vue.
En d'autres termes, le fait que la prise de vue soit réalisée au point **T** de transit permet d'avoir une grande stabilité du récipient lors de la prise de vue car à ce point, le récipient est saisi au-dessus et en dessous de la collerette du récipient par des organes 15 de préhension de la première roue 13 et de la deuxième roue 14. Cette grande stabilité du récipient lors de la prise de vue permet d'éviter les prises de vue floues.

Il va de soi qu'il convient de choisir un appareil **19** de prises de vues performant, tant en définition qu'en vitesse. On peut opter pour un appareil photographique (numérique) dont l'obturateur est actionné (par ex. sur commande d'un capteur) au passage de chaque récipient **2,** ou pour une caméra qui filme de manière continue et dont le flux vidéo est échantillonné pour en extraire les images pertinentes de chaque récipient **2.**

La présence de l'écran placé (du point de vue de l'appareil **19** de prises de vues) derrière le récipient **2** permet de mieux isoler (et donc de mieux distinguer) la silhouette du corps **3,** au bénéfice de la précision de la mesure.

Dès lors, en employant des moyens de post-traitement performants (ce qu'offrent les systèmes informatiques modernes), il est possible d'inspecter un récipient **2** en quelques dizaines de millisecondes, ce qui demeure inférieur au temps de transit de chaque récipient **2** par le point **T** de transit (lequel est d'environ un dixième de seconde).

Ainsi, l'inspection d'un récipient **2** comprend les opérations suivantes.

Une première opération consiste à effectuer une prise de vue du récipient **2** lors de son passage par le point **T** de transit (ou de transfert). Cette prise de vue peut être :
- ponctuelle, c'est-à-dire qu'il s'agit d'une image capturée par l'appareil **19** (qui, dans ce cas, comprend un obturateur devant un capteur optique) à l'instant où le récipient **2** passe effectivement par le point **T** de transit, ou
- sélectionnée parmi un flux d'images capturées en continu par l'appareil **19** (qui, dans ce cas, est une caméra).

Une deuxième opération consiste à isoler sur l'image du récipient la ou les zones **22** d'intérêt.

Une troisième opération consiste à comparer, dans la ou chaque zone **22** d'intérêt, le contour du récipient **2** avec le contour correspondant du modèle de récipient en mémoire.

Une quatrième opération consiste à déterminer, à l'issue de cette comparaison, si le récipient **2** est conforme au modèle.

Si le récipient **2** décrété conforme au modèle, l'inspection est achevée et le récipient **2** poursuit son trajet pour subir les traitements successifs dans l'installation **1.**

A contrario, si le récipient **2** est décrété non conforme au modèle, l'inspection est suivie d'une éjection de ce récipient **2,** qui est déclenchée lors de son passage au droit du dispositif **28** d'éjection.

## Revendications

1. Système (**7**) de transport d'articles (**2**), qui comprend un bâti (**8**) et :
- au moins une première roue (**13**) tournant par rapport au bâti (**8**) autour d'un premier axe (**A1**) de rotation et portant sur sa périphérie une série d'organes (**15**) de préhension des articles (**2**) qui définissent pour les articles (**2**) un trajet (**TRA**) de déplacement en arc de cercle ;
- un dispositif (**18**) d'inspection optique des articles (**2**) qui inclut, de part et d'autre d'un point (**T**) de transit situé sur le trajet (**TRA**) :
∘ un appareil (**19**) de prise de vues comprenant un objectif (**20**) orienté selon un axe (**O**) optique situé sensiblement dans un plan (**P**) de tangence au trajet contenant le point de transit (**T**) ;
∘ un écran (**21**) placé en regard de l'objectif (**20**), perpendiculairement à l'axe (**O**) optique,
- au moins une deuxième roue (14) tournant par rapport au bâti (8) autour d'un deuxième axe (A2) de rotation et portant sur sa périphérie une série d'organes (15) de préhension des articles (2),
**caractérisé en ce que** l'appareil (**19**) et l'écran (**21**) sont disposés de part et d'autre d'un point (**T**) de transit commun à la première roue (**13**) et à la deuxième roue (**14**) et correspondant à un point de transfert de l'une à l'autre, des organes (15) de préhension des première et deuxième roues (13, 14) contribuant simultanément à tenir l'article et **en ce que** le premier axe (A1) de rotation et le deuxième axe (A2) de rotation sont verticaux et l'objectif (20) est orienté de manière telle que l'axe optique O est horizontal.

2. Système (**7**) d'articles selon la revendication 1, **caractérisé en ce que** le dispositif (**18**) d'inspection comprend un portique (**24**) sur lequel sont conjointement montés l'appareil (**19**) de prise de vues et l'écran (**21**).

3. Système (**7**) selon la revendication précédente, **caractérisé en ce que** le portique (**24**) est fixé sur le bâti (**8**).

4. Système (**7**) selon l'une des revendications précédentes, **caractérisé en ce que** l'appareil (**19**) de prise de vues comprend deux objectifs (**20**) superposés, dont les axes (**O**) optiques sont parallèles.

5. Système (**7**) selon l'une des revendications précédentes, **caractérisé en ce que** l'écran (**21**) comprend un panneau (**23**) diffuseur rétroéclairé.

6. Système (**7**) selon l'une des revendications précédentes, **caractérisé en ce qu'**il comprend en outre un dispositif (**28**) d'éjection des articles non conformes, monté sous une roue (**13** ou **14**).

7. Système (**7**) selon la revendication précédente, **caractérisé en ce que** chaque organe (**15**) de préhension se présente sous forme d'une pince ayant deux mors (**16, 17**) articulés entre une position de préhension dans laquelle les mors (**16, 17**) sont rapprochés, et une position de libération dans laquelle les mors (**16, 17**) sont écartés, l'un des mors (**17**) étant solidaire d'un levier (**30**) portant un galet (**31**), et **en ce que** le dispositif (**28**) d'éjection comprend un actionneur (**32**) mobile entre une position rétractée dans laquelle il est écarté du chemin parcouru par le galet (**31**), et une position déployée dans laquelle il se trouve sur le chemin parcouru par le galet (**31**) pour le placer en position de libération.

8. Système (**7**) selon la revendication précédente, **caractérisé en ce que** l'actionneur (**32**) est porté par une tige (**33**) de vérin montée en translation dans un corps (**34**) de vérin solidaire du bâti (**8**).

9. Système (**7**) selon la revendication précédente, **caractérisé en ce que** le corps (**34**) de vérin est solidaire d'un porte-fusée (**29**) solidaire du bâti (**8**) et dans lequel est monté un arbre formant l'axe (**A1** ou **A2**) de rotation de la roue (**13** ou **14**).

10. Système (**7**) selon l'une des revendications 6 à 9, **caractérisé en ce que** le dispositif (**28**) d'éjection comprend une soufflette (**35**) raccordée à une source d'air sous pression.

11. Système (**7**) selon les revendications 7 et 10, prises en combinaison, **caractérisé en ce que** la soufflette (**35**) débouche à l'aplomb de l'actionneur (**32**).

12. Installation (**1**) de manutention d'articles, qui comprend un système (**7**) de transport selon l'une des revendications précédentes.

13. Procédé d'inspection d'articles (**2**) sur un système (**7**) de transport selon l'une des revendications précédentes, qui comprend les opérations suivantes :
- Prendre en compte une prise de vue de l'article (**2**) lors de son passage par le point (**T**) de transit ;
- Comparer dans une image résultant de cette prise de vue au moins une zone (**22**) d'intérêt de l'article (**2**) avec une zone correspondante d'un article modèle.

14. Procédé d'inspection d'article (2) selon la revendication précédente, sur un système (7) de transport selon la revendication 7, **caractérisé en ce qu'**il comprend, si l'article (2) est décrété non conforme au modèle, une opération d'éjection de l'article (2) lors de son passage au droit du dispositif (28) d'éjection.

## Patentansprüche

1. System (7) zum Transportieren von Gegenständen (2), beinhaltend ein Gestell (8) und:
- mindestens ein erstes Rad (13), das sich in Bezug auf das Gestell (8) um eine erste Drehachse (A1) dreht und an seinem Umfang eine Reihe von Organen (15) zum Greifen der Gegenstände (2) trägt, die für die Gegenstände (2) eine kreisbogenförmige Bewegungsbahn (TRA) definieren;
- eine Vorrichtung (18) zur optischen Kontrolle der Gegenstände (2), die zu beiden Seiten eines auf der Bahn (TRA) befindlichen Transitpunktes (T) Folgendes umfasst:
o einen Bildaufnahmeapparat (19), der ein Objektiv (20) beinhaltet, das entlang einer optischen Achse (O) ausgerichtet ist, die sich im Wesentlichen in einer Tangentialebene (P) der Bahn, die den Transitpunkt (T) enthält, befindet;
o einen Schirm (21), der senkrecht zu der optischen Achse (O) gegenüber dem Objektiv (20) platziert ist,
- mindestens ein zweites Rad (14), das sich in Bezug auf das Gestell (8) um eine zweite Drehachse (A2) dreht und an seinem Umfang eine Reihe von Organen (15) zum Greifen der Gegenstände (2) trägt,
**dadurch gekennzeichnet, dass** der Apparat (19) und der Schirm (21) zu beiden Seiten eines Transitpunktes (T) angeordnet sind, der dem ersten Rad (13) und dem zweiten Rad (14) gemein ist und einem Übergabepunkt von einem zum anderen entspricht, wobei Greiforgane (15) des ersten und des zweiten Rades (13, 14) gleichzeitig dazu beitragen, den Gegenstand zu halten, und dass die erste Drehachse (A1) und die zweite Drehachse (A2) vertikal sind und das Objektiv (20) so ausgerichtet ist, dass die optische Achse O horizontal ist.

2. System (7) für Gegenstände nach Anspruch 1, **dadurch gekennzeichnet, dass** die Kontrollvorrichtung (18) ein Portal (24) beinhaltet, an dem der Bildaufnahmeapparat (19) und der Schirm (21) gemeinsam angebracht sind.

3. System (7) nach dem vorhergehenden Anspruch, **dadurch gekennzeichnet, dass** das Portal (24) an dem Gestell (8) befestigt ist.

4. System (7) nach einem der vorhergehenden Ansprüche, **dadurch gekennzeichnet, dass** der Bildaufnahmeapparat (19) zwei übereinanderliegende Objektive (20) beinhaltet, deren optische Achsen (O) parallel sind.

5. System (7) nach einem der vorhergehenden Ansprüche, **dadurch gekennzeichnet, dass** der Schirm (21) eine Diffusorplatte (23) mit Hintergrundbeleuchtung beinhaltet.

6. System (7) nach einem der vorhergehenden Ansprüche, **dadurch gekennzeichnet, dass** es ferner eine Vorrichtung zum Ausstoßen (28) der nicht konformen Gegenstände beinhaltet, die unter einem Rad (13 oder 14) angebracht ist.

7. System (7) nach dem vorhergehenden Anspruch, **dadurch gekennzeichnet, dass** jedes Greiforgan (15) in Form einer Zange vorliegt, die zwei Backen (16, 17) aufweist, die zwischen einer Greifposition, in der die Backen (16, 17) einander angenähert sind, und einer Freigabeposition, in der die Backen (16, 17) voneinander entfernt sind, gelenkig beweglich sind, wobei eine der Backen (17) fest mit einem Hebel (30) verbunden ist, der eine Rolle (31) trägt, und dass die Ausstoßvorrichtung (28) ein Betätigungselement (32) beinhaltet, das zwischen einer eingefahrenen Position, in der es von dem Weg, der von der Rolle (31) zurückgelegt wird, entfernt ist, und einer ausgefahrenen Position, in der es sich auf dem von der Rolle (31) zurückgelegten Weg befindet, um diese in der Freigabeposition zu platzieren, beweglich ist.

8. System (7) nach dem vorhergehenden Anspruch, **dadurch gekennzeichnet, dass** das Betätigungselement (32) von einer Zylinderstange (33) getragen wird, die in einem Zylindergehäuse (34), das fest mit dem Gestell (8) verbunden ist, translatorisch angebracht ist.

9. System (7) nach dem vorhergehenden Anspruch, **dadurch gekennzeichnet, dass** das Zylindergehäuse (34) fest mit einem Achsschenkel (29) verbunden ist, der fest mit dem Gestell (8) verbunden ist und in dem eine Welle angebracht ist, die die Drehachse (A1 oder A2) des Rades (13 oder 14) bildet.

10. System (7) nach einem der Ansprüche 6 bis 9, **dadurch gekennzeichnet, dass** die Ausstoßvorrichtung (28) eine Blaseinrichtung (35) beinhaltet, die an eine Druckluftquelle angeschlossen ist.

11. System (7) nach den Ansprüchen 7 und 10 in Kombination, **dadurch gekennzeichnet, dass** die Blaseinrichtung (35) lotrecht zu dem Betätigungselement (32) mündet.

12. Anlage (1) zur Beförderung von Gegenständen, die ein Transportsystem (7) nach einem der vorhergehenden Ansprüche beinhaltet.

13. Verfahren zur Kontrolle von Gegenständen (2) in einem Transportsystem (7) nach einem der vorhergehenden Ansprüche, das die folgenden Schritte beinhaltet:
- Berücksichtigen einer Bildaufnahme des Gegenstands (2) bei seinem Passieren des Transitpunktes (T);
- Vergleichen, in einem Bild, das sich aus dieser Bildaufnahme ergibt, mindestens eines Bereichs (22) von Interesse des Gegenstands (2) mit einem entsprechenden Bereich eines Mustergegenstands.

14. Verfahren zur Kontrolle eines Gegenstands (2) nach dem vorhergehenden Anspruch in einem Transportsystem (7) nach Anspruch 7, **dadurch gekennzeichnet, dass** es, wenn der Gegenstand (2) als mit dem Muster nicht konform deklariert wird, einen Schritt des Ausstoßens des Gegenstands (2) bei seinem Passieren der Ausstoßvorrichtung (28) beinhaltet.

## Claims

1. System (7) for transporting articles (2), which comprises a frame (8) and:
- at least one first wheel (13) rotating with respect to the frame (8) about a first axis (A1) of rotation and bearing on its periphery a series of members (15) for gripping the articles (2) that define, for the articles (2), a circular-arc-shaped movement path (TRA);
- a device (18) for optical inspection of the articles (2) that includes, on either side of a transit point (T) situated on the path (TRA):
o an image capturing apparatus (19) comprising a lens (20) oriented along an optical axis (O) situated substantially in a plane (P) of tangency to the path containing the transit point (T);
o a screen (21) placed facing the lens (20), perpendicular to the optical axis (O),
- at least one second wheel (14) rotating with respect to the frame (8) about a second axis (A2) of rotation and bearing on its periphery a series of members (15) for gripping the articles (2),
**characterized in that** the apparatus (19) and the screen (21) are disposed on either side of a transit point (T) common to the first wheel (13) and the second wheel (14) and corresponding to a point of transfer from one to the other, gripping members (15) of the first and second wheels (13, 14) contributing simultaneously to holding the article, and **in that** the first axis (A1) of rotation and the second axis (A2) of rotation are vertical and the lens (20) is oriented such that the optical axis O is horizontal.

2. System (7) of articles according to Claim 1, **characterized in that** the inspection device (18) comprises a gantry (24) on which the image capturing apparatus (19) and the screen (21) are jointly mounted.

3. System (7) according to the preceding claim, **characterized in that** the gantry (24) is fastened to the frame (8).

4. System (7) according to one of the preceding claims, **characterized in that** the image capturing apparatus (19) comprises two superposed lenses (20), the optical axes (O) of which are parallel.

5. System (7) according to one of the preceding claims, **characterized in that** the screen (21) comprises a backlit diffuser panel (23).

6. System (7) according to one of the preceding claims, **characterized in that** it also comprises a device (28) for ejecting non-compliant articles, mounted beneath a wheel (13 or 14).

7. System (7) according to the preceding claim, **characterized in that** each gripping member (15) is in the form of a clamp having two jaws (16, 17) that are articulated between a gripping position in which the jaws (16, 17) are close together, and a release position in which the jaws (16, 17) are spaced apart, one of the jaws (17) being secured to a lever (30) bearing a roller (31), and **in that** the ejection device (28) comprises an actuator (32) that is able to move between a retracted position in which it is spaced apart from the pathway followed by the roller (31), and a deployed position in which it is on the pathway followed by the roller (31) so as to place it in the release position.

8. System (7) according to the preceding claim, **characterized in that** the actuator (32) is borne by a ram rod (33) mounted for translational movement in a ram body (34) secured to the frame (8).

9. System (7) according to the preceding claim, **characterized in that** the ram body (34) is secured to a stub axle (29) secured to the frame (8), in which is mounted a shaft forming the axis (A1 or A2) of rotation of the wheel (13 or 14).

10. System (7) according to one of Claims 6 to 9, **characterized in that** the ejection device (28) comprises a blower (35) connected to a source of pressurized air.

11. System (7) according to Claims 7 and 10, taken in combination, **characterized in that** the blower (35) opens vertically in line with the actuator (32).

12. Installation (1) for handling articles, which comprises a transport system (7) according to one of the preceding claims.

13. Method for inspecting articles (2) on a transport system (7) according to one of the preceding claims, which comprises the following operations:
- Taking into account an image capture of the article (2) as it passes via the transit point (T);
- Comparing, in an image resulting from this image capture, at least one zone (22) of interest of the article (2) with a corresponding zone of a model article.

14. Method for inspecting an article (2) according to the preceding claim, on a transport system (7) according to Claim 7, **characterized in that** it comprises, if the article (2) is declared non-compliant with the model, an operation of ejecting the article (2) as it passes in line with the ejection device (28).
